## Europäisches Patentamt
## European Patent Office
## Office européen des brevets

(11) Publication number: **0 292 460**
**A2**

# (12) EUROPEAN PATENT APPLICATION

(21) Application number: **88850177.2**

(22) Date of filing: **20.05.88**

(51) Int. Cl.⁴: **H 02 G 11/02**

(30) Priority: **21.05.87 SE 8702111**

(43) Date of publication of application:
**23.11.88 Bulletin 88/47**

(84) Designated Contracting States:
**DE ES FR GB IT SE**

(71) Applicant: **GH PRODUKT AB**
**Box 17**
**S-575 00 Eksjö (SE)**

(72) Inventor: **Arvidsson, Arne**
**PL 261**
**S-570 93 Figgeholm (SE)**

(74) Representative: **Delhage, Einar**
**Bergenstrahle & Lindvall AB Sankt Paulsgatan 1**
**S-116 47 Stockholm (SE)**

(54) Electric cable reel.

(57) In an electric cable reel with a drum (2), from and onto which a current conducting electric cable with electric end connections (16) is windable, the drum (2) is fixed, and a cable guiding means (10,12,22) rotatable round the axis of the drum is arranged for guiding the cable (16) out from and onto the drum, respectively.

Fig 1

**Description**

**A cable reel.**

The present invention relates to an electric cable reel with a drum, from which and onto which a current carrying electric cable with electric end connections is windable.

In a type of electric cable reel, commonly occurring on the market, the drum is rotatably arranged on a shaft. A fixed connection is in current conducting connection via a sliding foil or slip ring with the cable wound onto the drum. At winding out of the cable during rotation of the drum a return spring is stretched. By disconnecting a locking mechanism, e.g. by jerking the cable, the spring is released and draws in the cable with a considerable force onto the drum.

At the known electric cable reel the slip ring makes the design complicated and more expensive, and increases the total resistance of the transmission. The latter becomes particularly noticeable if the cable reel is used in fouling environments, due to deposits on the contact surfaces, which at worst can even lead to interruption. The pulling in of the cable by spring force implies an unpleasant factor at use, which can give rise to personal injury.

There is also a need of using cable reels for signal transmission in electric remote control systems. Here the slip contact transmission at conventional cable drums is directly unsuitable also in clean environments, due to the risk for distorsion of the signals.

In remote control systems for hydraulic implements with a plurality of possibilities of movement there is used for the remote control a portable control switch board, which is movable with respect to the hydraulic implement and from which electric control signals are sent to an electronic unit for controlling the movement of the hydraulic valves of the implement. The system also includes an electric power source, e.g. a battery for the current consuming components of the system. A long combined electric power and signal cable extends between the control switch board and the electronic unit via a connecting unit, for conducting drive current to the switch board from the battery and for conducting control signals from the switch board to the electronic unit. Said long combined cable is tiresome to handle and has, in practice, turned out to be able to cause problems with respect to the laying out thereof. It has therefore been considered the possibility to take care of the cable by means of a cable reel. A known cable reel of the kind described above, is, however, completely unuseable, for the above stated reasons.

A general object of the present invention is to provide an electric cable reel with a fundamentally simpler and cheaper design than that of earlier known reels.

A particular object of the invention is to provide an electric cable reel arrangement, that eliminates the need of slip contacts, and particularly an arrangement which is thereby well suited for signal cables in electric remote control systems, in particular a remote control system for hydraulic implements of the kind described above.

The above and other objects of the invention, which will also be evident from the description below, have been attained in that the electric cable reel according to the invention has obtained the features stated in claim 1. A plurality of advantageous embodiments of the cable reel according to the invention have obtained the features stated in the subclaims.

The invention also relates to the use of such a cable reel for signal cables in an electric remote control system, in particular use of the kind stated in claim 8, with advantageous embodiments thereof also stated in claims 9 and 10.

The invention will now be described closer below with reference to the attached drawings, on which

Fig. 1 is a partly cut up end view illustrating a first embodiment of a cable reel according to the invention,

Fig. 2 shows a sideview of the cable reel according to Fig. 1 with a cable drum included in the cable reel in axial section,

Fig. 3 in a similar view as Fig. 2 shows a second embodiment of a cable reel according to the invention,

Figures 4 and 5 in similar views as Figures 1 and 2 show a third embodiment of a cable reel according to the invention.

Fig. 6 is a perspective view very schematically illustrating a remote control system for a hydraulic implement, in which the cable reel according to the invention is used for combined electric power and signal transmission.

In the different Figures the same or similarly operating parts have been provided with the same reference numerals.

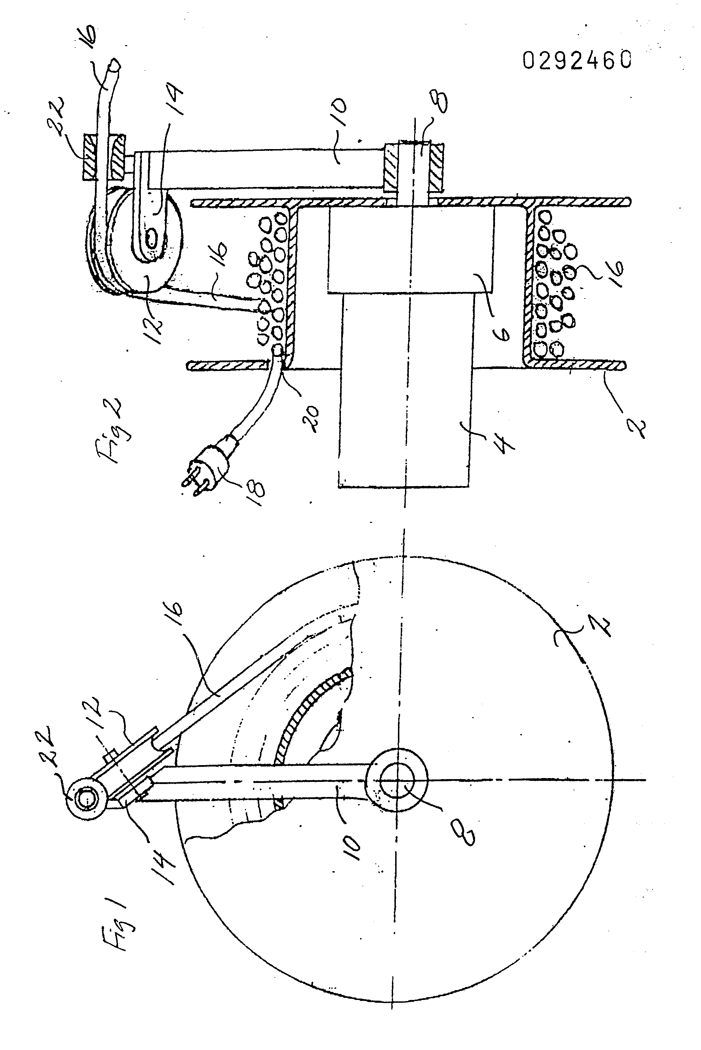

The cable reel schematically illustrated in Figures 1 and 2 includes a fixed cable drum 2, which can be carried by a frame, not shown. In the inner of the drum an electric motor 4 is carried, which via a gear 6 is arranged to drive a shaft 8 rotatably journalled in the drum. On the shaft 8 an arm 10 is attached which at its upper end, located above the periphery of the drum 2, carries an idle running deflector roll 12. More particularly the deflector roll 12 is carried by a support arm 14 extending inwardly from the arm 10 over the drum so that the plane of the roll leans with respect to the arm 10 as appears from Fig. 1.

On the fixed drum 2 an electric cable 16 is wound. More particularly an end 18 of the same provided with a plug contact extends outwardly through an opening 20 in the gable of the fixed drum 2 remote from the arm 10. After a number of turns around the drum 2 the cable 16 continues via the deflector roll 12 through a sleeve shaped cable guiding element 22 attached at the upper end of the arm 10. The element 22 is diametrically divideable, in a manner not shown, in order to make possible easy introduction and removal of the cable.

In operation the cable 16 is pulled, for winding it out, by hand through the cable guiding element 22, whereby the arm 10 rotates during dewinding of the cable 16 from the drum 2. The above-mentioned leaning of the deflection roll 12 is such that its plane extends approximately tangential to the peripheral surface of the cable packet wound on the drum 2.

For pulling in the cable the motor 4 is started, that rotates the arm 10 in a direction opposite to that occurring at pulling out of the cable, whereby the cable is wound again onto the drum.

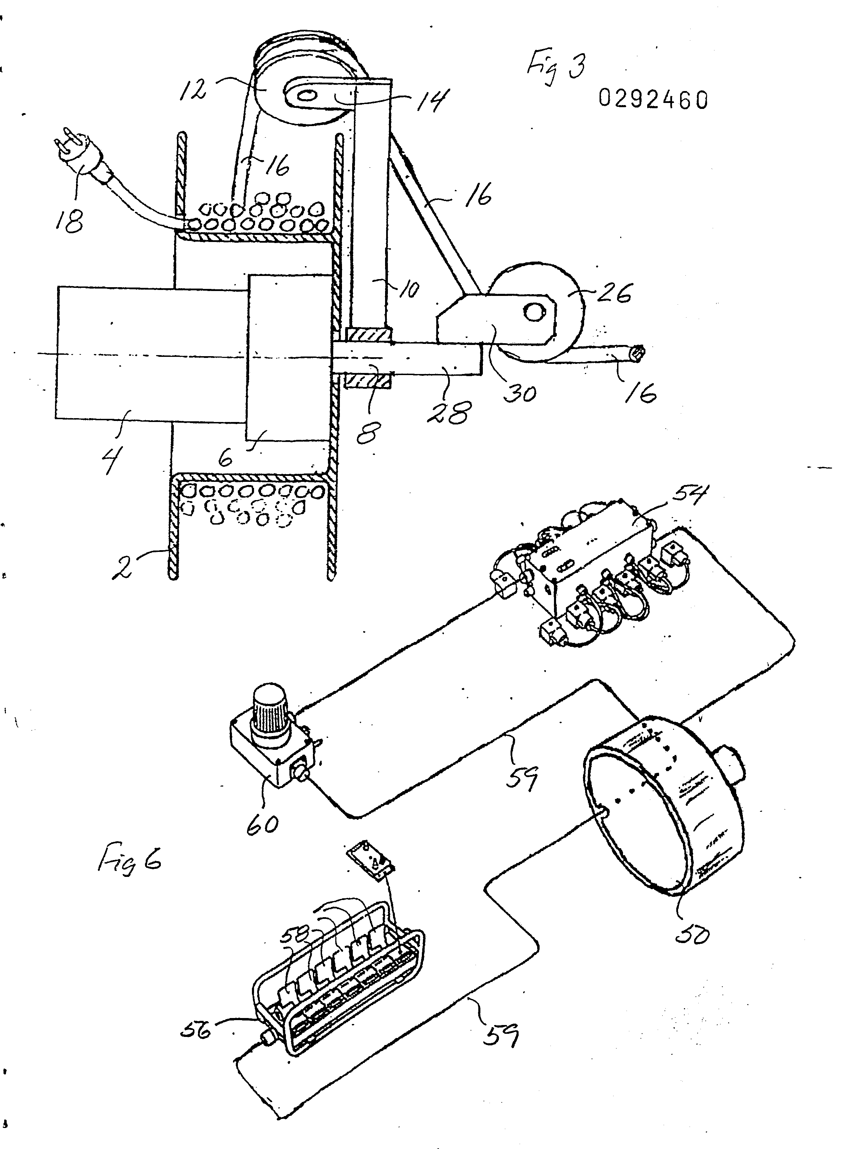

The embodiment according to Fig. 3 differs from that according to Figures 1 and 2 in that from the deflection roll 12, the cable is guided to an idle running deflection roll 26, which is mounted on an extension 28 of the shaft 8 via a bracket 30.

By this embodiment the cable will all the time move only in its own length direction at pulling in and out, under the action of the pulling in and pulling out, respectively, exercised on the same. This gives a smoother course to the movement of the cable, that can be valuable in some environments where the cable in its wound out condition can extend in the vicinity of various different objects, which could obstruct the pulling in or out of the cable at the embodiment according to Figures 1 and 2.

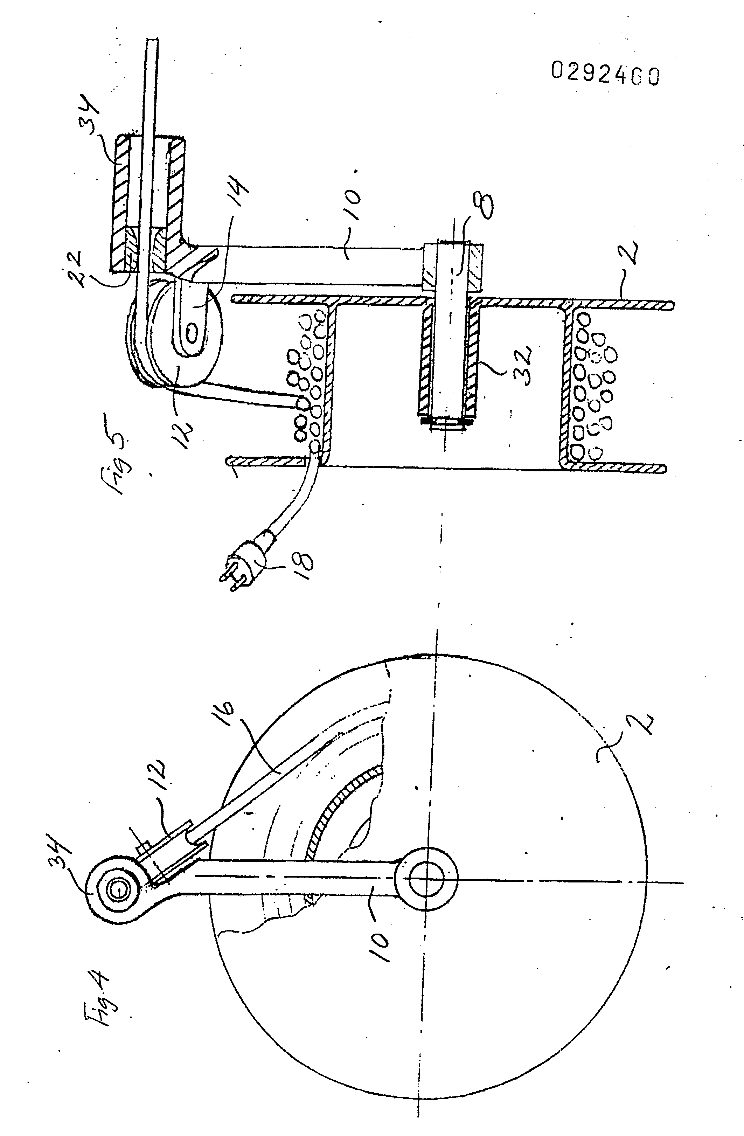

Figures 4 and 5 show a very simple and advantageous embodiment. More particularly this differs from the embodiment according to Figures 1 and 2 in that the motor and the gear have been removed and the shaft 8 is rotatably journalled idle running in a bushing 32 joined to the drum 2. The cable guide element 22 is furthermore coaxially mounted in a sleeve shaped sidewardly extending handle 34 on the end of the arm 10.

Pulling in of the cable is carried through at this embodiment by rotation of the arm 10 by means of manually moving the handle 34 in a rotational direction opposite to that occurring at pulling out of the cable. The cable extends, as appears from Fig. 4, axially through the handle 34 and the cable guiding element 22 to the deflection roll 12.

In Fig. 6 the use of a cable reel 50 according to the invention in a remote control system for a hydraulic implement, not shown, such as a crane or the like, with a plurality of alternatives of movement, is shown very schematically. More particularly the remote control system includes an electronic unit 54 for controlling hydraulic control valves, not shown, for the hydraulic fluid supply to the hydraulic implement. A portable control switch board 56 for generating control signals to the electronic unit 54 by means of manual switches indicated at 58 is, via a cable 59 extending over the cable reel 50, connected to a coupling unit 60. Also the electronic unit 54 and a battery for current supply to the electric components of the remote control system are connected to the coupling unit 60.

The cable reel 50 admits, under complete control of the extension of the cable 59 running between the control board 56 and the coupling unit 60, pulling out of the control board 56 to a desired position of control with respect to the position of the hydraulic implement.

The cable 59 conducts control signals from the control board 56 to the electronic unit 54 in one direction, and drive current in the other direction towards the control board 56. Pulling in of the cable to a desired length is carried through by operation of the drive motor for the cable reel from an additional means in the control board 56. Alternatively the motor of the cable reel may be energized via a simple switch.

The invention is, of course, not limited to the embodiments shown on the drawings and described above.

For further adaption of the leaning plane of the deflector roll 12 during operation, the deflector roll may be pivotally mounted on the arm 10 by means of a pivot admitting the deflector roll 12 to be successively set during winding on and off of the cable so that the plane thereof continously approximately extends tagentially to the peripheral surface of the cable package wound on the drum 2, due to the force exercised by the cable on the deflector roll during pulling in or out.

The embodiment according to Fig. 3, can, for certain embodiments, be supplemented with a further deflection roll between the deflection rolls 12 and 26 for compensating the influence of the angular difference between the planes of the rolls 12 and 26. Also this further deflection roll could then be pivotally arranged. Alternatively, a suitably shaped guiding channel between the deflection rolls 12 and 26 can be connected with the arm structure 10.

The element 10 need not necessarily be shaped as an arm but can take every desired arbitrary shape. As an example the arm 10 could be replaced by a disc attached on the shaft 8, said disc in a position at its periphery carrying the deflection roll 12 and the handle 34, if any.

Furthermore, if desired, suitably shaped distributing means can be arranged for even winding up of the cable from the deflector roll 12 onto the drum, e.g. by means of suitable guiding means provided in the vicinity of the deflector roll 12, or by a suitable means of suitable shape of the surface of the drum.

At last, it should, however, be added that additional means of the kind described, which mean a complication of the design, are not necessary for most applications.

## Claims

1. Electric cable reel with a drum (2) from which and onto which a current conducting electric cable with electric end connections is windable, characterized in that the drum (2) is fixed and that a cable guiding means (10,12,22) rotatable about the axis of the drum is arranged for guiding the cable (16) out from or up onto the drum, respectively.

2. A cable reel according to claim 1, characterized in that the cable guiding means (10,12,22) has a guiding channel (22) located outside the periphery of the drum (2) and extending essentially in the direction of the drum axis.

3. A cable reel according to claim 2, characterized by a deflector roll (12) associated with the guiding channel (22) for deflecting the cable leading from the drum to the guiding channel (22).

4. A cable reel according to claim 1, characterized in that the cable (16) is guided via deflector rolls (12,26), or similar deflecting means, included in the cable guiding means, for outlet essentially centrally with respect to the drum (2).

5. A cable reel according to any of the preceding claims, characterized by a control handle (34) arranged on the rotatable cable guiding means (10,12,22) for winding up the cable (16) onto the drum by manual rotation of the cable guiding means.

6. A cable reel according to any of the preceding claims, characterized by an operating motor (4) for winding up the cable on the drum by mechanical rotation of the cable guiding means (10,12,22).

7. Use of a cable reel according to any of the preceding claims, for a signal cable in an electrical remote control system.

8. Use according to claim 7, wherein the remote control system includes an apparatus intended for being controlled by means of electric control signals, a control switch board (56) movable with respect to the apparatus, from which electric control signals are transmitted to the apparatus, and an electric power source for the control switch board and the apparatus, characterized in that a combined power and signal cable (59) between the control switch board (56) and the apparatus for conducting drive current to the control switch board from the electric power source and control signals from the control switch board to the apparatus, is led over the cable reel (50).

9. Use according to claim 7, characterized in that the cable is also used for transmitting electric drive current to an operating electric motor (4) for the rotatable cable guiding means (10,12,22) arranged in the cable reel.

10. Use according to claims 8 and 9, characterized in that the supply of driving current to the electric motor (4) is controlled from the control switch board.

Fig 1

Fig 2

0292460

Fig 3

0292460

12

14

16

16

18

10

16

26

28

30

16

4

6

8

2

54

59

60

Fig 6

58

56

59

50

0292460

Fig. 5

34
22
14
10
8
2
32
12
18

Fig. 4

34
12
16
10
2